# EUROPÄISCHE PATENTSCHRIFT

(11) **EP 3 098 399 B1**
(45) Veröffentlichungstag und Bekanntmachung des Hinweises auf die Patenterteilung: **31.01.2018**
(21) Anmeldenummer: 16168078.0
(22) Anmeldetag: 03.05.2016
(51) Int. Cl.: F01K 9/00, F28B 1/04

(54) **BEHÄLTNIS FÜR EINE ABWÄRMENUTZUNGSEINRICHTUNG**
CONTAINER FOR A WASTE HEAT USE DEVICE
RECIPIENT POUR UN DISPOSITIF DE RECUPERATION DE CHALEUR DISSIPEE

(30) Priorität: 18.05.2015 DE 102015209067
(43) Veröffentlichungstag der Anmeldung: 30.11.2016
(73) Patentinhaber: Mahle International GmbH, 70376 Stuttgart (DE)
(72) Erfinder: BRÜMMER, Richard, 70499 Stuttgart (DE); HOFMANN, Herbert, 70376 Stuttgart (DE); IRMLER, Klaus, 72072 Tübingen (DE); LUTZ, Rainer, 71711 Steinheim (DE); MERCADER QUINTANA, David, 71638 Ludwigsburg (DE); PANTOW, Eberhard, 71364 Winnenden (DE); VON LÜTZAU, Frank, 71364 Winnenden (DE)
(74) Vertreter: BRP Renaud & Partner mbB Rechtsanwälte Patentanwälte Steuerberater

(56) Entgegenhaltungen:
- DE-A1-102009 050 068
- DE-A1-102013 211 875
- US-A1- 2013 327 041

## Beschreibung

Die Erfindung betrifft ein Behältnis für eine Abwärmenutzungseinrichtung sowie eine Abwärmenutzungseinrichtung mit einem solchen Behältnis.

Bei Brennkraftmaschinen, insbesondere bei Kolbenmotoren, wird durch Verbrennen eines Kraftstoffs mechanische Antriebsleistung erzeugt. Ein Großteil der im Kraftstoff enthaltenen chemischen Energie fällt dabei als Wärme ab, die häufig ungenutzt bleibt. Regelmäßig muss sogar ein Teil der nutzbaren Antriebsleistung zum Kühlen der Brennkraftmaschine und deren Aggregate verwendet werden. Mit einer Abwärmenutzungseinrichtung kann die bei einer Brennkraftmaschine anfallende Abwärme genutzt werden, bspw. um weitere Antriebsleistung oder elektrische Energie bereitzustellen. Hierdurch kann der energetische Gesamtwirkungsgrad der Brennkraftmaschine verbessert werden.

Derartige Abwärmenutzungseinrichtungen sind beispielsweise aus der DE10 2009 050 068 A1, aus der US2013/0327041 A1, aus der DE10 2013 211 875 A1, aus der EP 2 573 335 A2 und aus der DD 136 280 bekannt.

Abwärmenutzungseinrichtungen können als Kreisprozess in Form eines sogenannten Carnot-Prozesses ausgestaltet sein. Ein spezieller Carnot-Prozess ist der sog. Clausius-Rankine-Prozess. Bei einem solchen Clausius-Rankine-Prozess zirkuliert in einem Abwärmenutzungskreis ein Arbeitsmedium. Im Abwärmenutzungskreis befindet sich ein Verdampfer zum Verdampfen des Arbeitsmediums, der hierzu der Brennkraftmaschine Wärme entzieht. Stromab des Verdampfers befindet sich im Abwärmenutzungskreis eine Expansionsmaschine zum Entspannen des Arbeitsmediums auf einen Niederdruck. Stromab der Expansionsmaschine befindet sich im Abwärmenutzungskreis ein Kondensator zum Verflüssigen des Arbeitsmediums. Stromab des Kondensators ist im Abwärmenutzungskreis eine Kompressionsmaschine zum Komprimieren des Arbeitsmediums auf einen Hochdruck zu finden. Von der Kompressionsmaschine gelangt das Arbeitsmedium wieder zum Verdampfer. Beim Entspannen des Arbeitsmediums in der Expansionsmaschine wird Wärmeenergie in mechanische Antriebsenergie umgewandelt, die direkt als mechanische Antriebsleistung genutzt werden kann oder mit Hilfe eines Generators in elektrische Energie gewandelt werden kann. Die Wärme zum Verdampfen des Arbeitsmediums kann bspw. dem Abgas der Brennkraftmaschine entzogen werden. Zum Fördern des Arbeitsmediums dient eine stromab des Kondensators im Abwärmenutzungskreis angeordnete Pumpe.

Als nachteilig bei einem solchen herkömmlichen Abwärmenutzungskreis erweist es sich, dass durch das Arbeitsmedium in der Pumpe unerwünschte Kavitationseffekte hervorgerufen werden können, die zu einer Beschädigung der mit dem Arbeitsmedium mechanisch in Kontakt stehenden Komponenten der Pumpe führen können. Dies kann im Extremfall sogar die Zerstörung der Pumpe zur Folge haben.

Es ist daher eine Aufgabe der vorliegenden Erfindung, eine Vorrichtung zur Verwendung in einem Abwärmenutzungskreis zu schaffen, die der Ausbildung von unerwünschten Kavitationseffekten in der das Arbeitsmedium antreibenden Pumpe entgegenwirkt.

Diese Aufgabe wird durch den Gegenstand des unabhängigen Anspruchs 1 gelöst. Bevorzugte Ausführungsformen sind Gegenstand der abhängigen Patentansprüche.

Grundgedanke der Erfindung ist demnach, ein Ausgleichbehältnis für einen Abwärmenutzungskreis - nachfolgend der Einfachkeit halber als "Behältnis" bezeichnet - bereitzustellen, welches eine Unterkühlung des Arbeitsmediums bewirkt, so dass dieses nur in flüssiger Phase durch die Pumpe strömt. Im Betrieb der Abwärmenutzungseinrichtung können sich in dem in den Abwärmenutzungskreis integrierten Ausgleichsbehältnis eine Dampf- und eine Flüssigphase des Arbeitsmediums derart einstellen, dass sich ein Kondensationsdruck ergibt, bei welchem die Unterkühlung des Arbeitsmediums im Wesentlichen konstant bleibt. Gelangt aus dem Kondensator ein unterkühltes, flüssiges Arbeitsmedium in das Ausgleichsbehältnis, so kondensiert ein Teil des darin enthaltenen Dampfes aus, und der Fluiddruck des Arbeitsmediums im Ausgleichsbehältnis nimmt ab. Gelangt hingegen Dampf aus dem Kondensator in das Ausgleichsbehältnis, so nimmt der Fluiddruck im Ausgleichsbehältnis aufgrund des zusätzlichen Dampfvolumens zu. Somit wird eine vollständige Kondensation des Arbeitsmediums beim Austritt aus dem Kondensator sichergestellt, ohne dass hierzu ein zusätzlicher, externer Regelmechanismus erforderlich wäre. Durch eine Anordnung der Pumpe unmittelbar stromab des Ausgleichsbehältnisses kann also im gewährleistet werden, dass das Arbeitsmedium des Abwärmenutzungskreises stets in flüssiger Form in die Pumpe eintritt. Dies führt dazu, dass keine unerwünschte Kavitation innerhalb der Pumpe auftreten kann.

Erfindungsgemäß wird vorgeschlagen, das Behältnis mit einem starren Gehäuse auszustatten, in welchem eine Trenneinrichtung aus einem fluiddichten und federelastischen Material angeordnet ist. Die Trenneinrichtung dient dabei dazu, den Gehäuseinnenraum in einen mit dem Arbeitsmedium in Form eines Fluids befüllbaren ersten Teilraum und einen dazu fluidisch getrennten zweiten Teilraum zu unterteilen, welcher fluidisch mit der äußeren Umgebung des Behältnisses verbunden ist und in welchen das Fluid aus dem ersten Teilraum nicht einzudringen vermag. Mittels des Trennelements kann das Volumenverhältnis der beiden Teilräume zueinander - zur Regelung der gewünschten Unterkühlung des Fluids - variiert werden. Sinkt der Kondensationsdruck in dem mit dem Fluid befüllten ersten Teilraum unter den im zweiten Teilraum herrschenden Umgebungsdruck, so wird unter Verringerung des Volumens des ersten Teilraums das im ersten Teilraum vorhandene flüssige Fluid zur aus dem Behältnis in den Abwärmenutzungskreis eingespeist. Die dazu erforderliche Volumenänderung des ersten Teilraums wird mit Hilfe des federelastischen Materials der Trenneinrichtung realisiert. Auf diese Weise werden ein unerwünschter Unterdruck im Abwärmenutzungskreis und damit etwaig verbundene Kavitationseffekte in der im Abwärmenutzungskreis verbauten Pumpe verhindert.

Ein erfindungsgemäßes Behältnis für eine Abwärmenutzungseinrichtung umfasst in einem ersten Aspekt ein Gehäuse, das einen Gehäuseinnenraum begrenzt. Im Gehäuseinnenraum ist eine Trenneinrichtung angeordnet, welche den Gehäuseinnenraum in einen mit einem Fluid befüllbaren ersten Teilraum und einen fluidisch vom ersten Teilraum getrennten, zweiten Teilraum unterteilt. Hierzu umfasst die Trenneinrichtung ein Trennelement aus einem fluiddichten und federelastischen Material. Mittels des Trennelements kann das Volumenverhältnis der beiden Teilräume zueinander variiert und somit auch eingestellt werden. Am Gehäuse ist ein Fluideinlass zum Einleiten des Fluids in den ersten Teilraum vorhanden. Am Gehäuse ist ferner ein Fluidauslass zum Ausleiten des Fluids aus dem ersten Teilraum vorhanden.

Bevorzugt ist das Trennelement eine fluiddichte Membran oder umfasst eine solche fluiddichte Membran. Die Verwendung einer fluiddichten Membran erlaubt eine flexible Volumenanpassung der Volumina der beiden Teilräume im Zuge des im Gehäuseinnenraum stattfindenden Druckausgleichs. Als Material für die Membran kommt insbesondere ein Elastomer in Betracht.

Bei einer vorteilhaften Weiterbildung umfasst oder ist das Trennelement, vorzugsweise die fluiddichte Membran, eine Folie aus einem flexiblen Material. Mit dieser Variante gehen besonders niedrige Fertigungskosten einher, die sich vorteilhaft auf die Herstellungskosten des gesamten Behältnisses auswirken.

Besonders bevorzugt kann das Trennelement, vorzugsweise die fluiddichte Membran, höchst vorzugsweise die Folie aus dem flexiblen Material, federelastisch dehnbar ausgebildet sein. Auf diese Weise wird sichergestellt, dass bei nicht befülltem Behältnis das Trennelement selbsttätig in einen wohlbestimmten Ausgangszustand zurück bewegt wird.

Zweckmäßig kann das Material des Trennelements, insbesondere das flexible Material der Folie, einen Kunststoff umfassen oder ein Kunststoff sein. Auch mit dieser Variante gehen besonders niedrige Fertigungskosten einher, die sich vorteilhaft auf die Herstellungskosten des gesamten Behältnisses auswirken.

Besonders bevorzugt kann die Membran mittels einer Klebverbindung innen am Gehäuse befestigt sein. Auf diese Weise kann mit geringem Herstellungsaufwand eine dauerhaft fluiddichte Fixierung der Membran am Gehäuse realisiert werden.

Besonders bevorzugt ist im Gehäuse eine Öffnung zum Druckausgleich vorhanden, welche den zweiten Teilraum des Gehäuseinnenraums fluidisch mit der äußeren Umgebung des Behältnisses verbindet. Eine solche Öffnung erlaubt es auf einfache Weise, sicherzustellen, dass im zweiten Teilvolumen stets der Umgebungsdruck der äußeren Umgebung des Behältnisses herrscht.

Bei einer anderen bevorzugten Ausführungsform umfasst das Gehäuse eine erste Gehäusewand und eine schwenkbar an dieser befestigte zweite Gehäusewand. In dieser Variante ist das Trennelement zur Ausbildung eines Behältnis-Balgs sowohl an der ersten als auch an der zweiten Gehäusewand befestigt. In diesem Szenario wird der erste Teilraum des Gehäuseinnenraums durch die beiden Gehäusewände und das Trennelement begrenzt. Die zum Druckausgleich erforderliche Volumenänderung des ersten Teilraums wird durch eine Schwenkbewegung der beiden Gehäusewände relativ zueinander realisiert, welcher das federelastische Trennelement zu folgen vermag. Der zweite Teilraum ist in diesem Szenario vorzugsweise offen ausgebildet und wird durch das Trennelement einerseits und die beiden offenen Endabschnitte der beiden Gehäusewände, die der schwenkbaren Verbindung gegenüberliegen, begrenzt.

In einer vorteilhaften Weiterbildung weisen die erste und die zweite Gehäusewand einen ersten bzw. zweiten Befestigungsabschnitt auf, mittels welchen sie aneinander befestigt sind, wobei das Trennelement in einem dem ersten Befestigungsabschnitt gegenüberliegenden Endabschnitt der ersten Gehäusewand an dieser befestigt ist. Weiterhin ist das Trennelement in einem dem zweiten Befestigungsabschnitt gegenüberliegenden Endabschnitt der zweiten Gehäusewand an dieser befestigt. Eine solche Anordnung ermöglicht eine technisch einfache Realisierung der beiden Teilräume mit der erforderlichen Volumenvariation des ersten Teilraums.

Besonders zweckmäßig kann wenigstens eine der beiden Gehäusewände, vorzugsweise Gehäusewände, zwischen einer ersten Position, in welcher der erste Teilraum ein maximales Volumen besitzt, und einer zweiten Position, in welcher dieses Volumen einen Minimalwert annimmt, schwenkbar ausgebildet sein. Dabei erstreckt sich die erste Gehäusewand in besagter erster Position bezüglich einer Gebrauchslage des Behältnisses vorzugsweise im Wesentlichen in vertikaler Richtung. Die zweite Gehäusewand ist in den von der zweiten Position verschiedenen Positionen, also auch in der ersten Position, schräg relativ zur ersten Gehäusewand angeordnet. Eine solche schräge Anordnung der zweiten Gehäusewand führt dazu, dass das Eigengewicht der zweiten Gehäusewand sowie des auf ihr lastenden Fluids im ersten Teilraum einer Bewegung der zweiten Gehäusewand von der ersten Position weg entgegenwirkt. Bei einem Kaltabstellen der Abwärmenutzungseinrichtung kann der Großteil des flüssigen Fluids aus dem Behältnis in den Abwärmenutzungskreis strömen, während sich die zweite Gehäusewand mittels einer Schwenkbewegung der ersten Gehäusewand annähert. Im Zuge dieser Bewegung reduziert sich die vom flüssigen Fluid auf die zweite Gehäusewand ausgeübte Gewichtskraft. Gleichzeitig wird das von der zweiten Gehäusewand ausgeübte Drehmoment reduziert, so dass sich der vom Trennelement gebildete Balg schließen kann. Auf diese Weise kann ein unerwünschter stationärer Unterdruck im Behältnis weitgehend oder sogar vollständig vermieden werden.

Zur Verbesserung des Wirkungsgrades der das Behältnis verwendenden Abwärmenutzungseinrichtung kann es von Vorteil sein, wenn der Umgebungsdruck in der äußeren Umgebung des Behältnisses größer ist als der Kondensationsdruck im Behältnis. Derartige Kondensationsbedingungen können in einer weiteren bevorzugten Ausführungsform mittels einer Vorspanneinrichtung erzielt werden, welches die zweite Gehäusewand von der ersten Gehäusewand weg, vorzugsweise zur ersten Position hin, vorspannt. Eine solche Vorspanneinrichtung wirkt der vom Umgebungsdruck auf die Gehäusewände ausgeübten Kraft zur Reduzierung des Volumens des ersten Teilraums entgegen, d.h. der Kondensationsdruck und der mittels des Vorspannelements erzeugte Gegendruck sind im Gleichgewichtszustand gleich dem Umgebungsdruck. Mit anderen Worten, der Kondensationsdruck ist in diesem Szenario wie gewünscht kleiner als der Umgebungsdruck.

Als konstruktiv besonders einfach realisierbar erweist sich eine weitere bevorzugte Ausführungsform, bei welcher die Vorspanneinrichtung eine Druckfeder umfasst, welche die beiden Gehäusewände zur ersten Position mit maximalem Volumen des ersten Teilraums hin vorspannt. Besonders bevorzugt kann die Druckfeder aus einem Bi-Metall oder aus einem Dehnstoff, der sich mit zunehmender Temperatur ausdehnt, bestehen, oder wenigstens eines dieser Materialien umfassen. Bei einer hohen Temperatur des Fluids führt die thermische Ausdehnung des Bi-Metalls bzw. Dehnstoffs zu der gewünschten, von der Vorspanneinrichtung erzeugten Vorspannkraft, welche ein Verharren der Gehäusewände in der ersten Position mit maximalem Volumen unterstützt. Kühlt sich das Fluid ab, so nimmt die von der Vorspanneinrichtung erzeugte Vorspannung ab, so dass die beiden Gehäusewände von der ersten Position weg in eine Position mit reduziertem Volumen des ersten Teilraums bewegt werden. Dies wirkt der Ausbildung eines zu hohen Unterdrucks im Abwärmenutzungskreis entgegen. Dabei ist es möglich, den Abwärmenutzungskreis bis zu einem vorgegebenen Unterdruck, beispielsweise von etwa 0,8bar, zu betreiben.

In einer weiteren bevorzugten Ausführungsform kann die Vorspanneinrichtung ein metastabiles Federelement mit wenigstens zwei stabilen Positionen umfassen. In der ersten Position ist der Balg quasi "aufgebläht", in der zweiten Position besitzt er ein minimales Volumen.

In bestimmten Betriebszuständen der das hier vorgestellte Behältnis verwendenden Abwärmenutzungseinrichtung kann es von Vorteil sein, wenn das Fluid bei einem Fluiddruck kondensiert wird, der unterhalb des Umgebungsdrucks liegt. In einer vorteilhaften Weiterbildung besitzt das Behältnis daher eine lösbare Fixiereinrichtung, welche die beiden Gehäusewände in der ersten Position fixiert. Somit kann das maximale Volumen des ersten Teilraums beibehalten und auf diese Weise der gewünschte Unterdruck erzeugt werden. Unterschreitet der Druck im Behältnis einen minimal zulässigen Schwellwert, so kontrahiert der erste Teilraum mit Hilfe des federelastischen Trennelements, so dass einem zu hohem Unterdruck entgegengewirkt wird.

Besonders zweckmäßig kann die lösbare Fixiereinrichtung als Schnappverschluss zum Fixieren der Gehäusewände in der ersten Position ausgebildet sein. Die Fixiereinrichtung umfasst dabei ein Betätigungselement zum Lösen des Schnappverschlusses. Wird die Abwärmenutzungseinrichtung deaktiviert, so kann der erzeugte Unterdruck durch Lösen des Schnappverschlusses mittels des Betätigungselements wieder aufgehoben werden.

In einer weiteren bevorzugten Ausführungsform ist das Trennelement in der Art eines Ballons ausgebildet. Ein solcher Ballon aus einem federelastisch verformbaren Material ist besonders kostengünstig herstellbar, was sich vorteilhaft auf die Herstellungskosten für das gesamte Behältnis auswirkt.

In einer anderen bevorzugten Ausführungsform ist die Trenneinrichtung als im Gehäuseinnenraum angeordneter Faltenbalg ausgebildet. Ein derartiger Faltenbalg erlaubt auf konstruktiv besonders einfache und somit kostengünstige Weise die Unterteilung des Gehäuseinnenraums in einen ersten und zweiten Teilraum, Bei dieser Variante weist die Trenneinrichtung wenigstens eine erste Faltenbalg-Wand auf, welche mittels des Trennelements federelastisch mit einer zweiten Faltenbalg-Wand verbunden ist. Die Verbindung ist dabei derart realisiert, dass die beiden Faltenbalg-Wände und das Trennelement den ersten Teilraum des Gehäuseinnenraums begrenzen. Der sich zwischen dem Innenraum des Faltenbalgs, also dem ersten Teilraum, und dem Gehäuse ausbildende Zwischenraum fungiert als zweiter Teilraum.

Besonders bevorzugt können die erste und die zweite Faltenbalg-Wand als den Faltenbalg stirnseitig begrenzende erste bzw. zweite Stirnwand ausgebildet sein. In diesem Szenario ist das Trennelement als den Faltenbalg umfangsseitig begrenzende, federelastische Umfangswand ausgebildet. Auf diese Weise kann die gewünschte Volumenvariation des Volumens des ersten Teilraums relativ zum zweiten Teilraum durch eine einfache Linearbewegung einer der beiden Stirnwände relativ zur anderen Stirnwand erfolgen. Bevorzugt erfolgt die Bewegung dabei in vertikaler Richtung. Auf diese Weise wird sichergestellt, dass sich die flüssige Phase des Fluids im Bereich des Gehäusebodens ansammelt, wo es bei geeigneter Anordnung des Fluidauslasses aus dem Behältnis entnommen und in den Abwärmenutzungskreis eingeleitet werden kann.

Kostenvorteile bei der Herstellung des Behältnisses ergeben sich, indem die Umfangswand mittels einer fluiddichten Klebverbindung an den beiden Stirnwänden befestigt wird.

In einer bevorzugten Ausführungsform der Erfindung kann der Fluidauslass einen nach außen vom Gehäuse abstehenden Auslassstutzen aufweisen. Der Auslassstutzen ist in einem bezüglich der Gebrauchslage des Behältnisses in der Abwärmenutzungseinrichtung unteren Bereich des Gehäuses angeordnet. Besonders bevorzugt ist der Auslassstutzen am Gehäuseboden des Gehäuses angeordnet. Auf diese Weise kann die in der Regel im unteren Bereich des Gehäuseinnenraums vorhandene flüssige Phase des Fluids direkt aus dem ersten Teilraum entnommen werden. Eine unerwünschte Entnahme der gasförmigen Phase des Fluid wird hingegen vermieden. Alternativ oder zusätzlich kann der Fluideinlass einen nach außen vom Gehäuse abstehenden Einlassstutzen aufweisen, der in einem unteren Bereich des Gehäuses, insbesondere am Gehäuseboden des Gehäuses angeordnet ist. Durch eine derartige Anordnung von Fluideinlas und Fluidauslass in demselben Bereich des Gehäuses wird der Anschluss des Behältnisses an den Abwärmenutzungskreislauf erleichtert.

Ein erfindungsgemäßes Behältnis für eine Abwärmenutzungseinrichtung umfasst in einem zweiten Aspekt ein einen Gehäuseinnenraum begrenzenden Gehäuse aus einem federelastischen Material, mittels welchem das Volumen des Gehäuseinnenraums variierbar ist. Am Gehäuse des Behältnisses ist ein Fluideinlass zum Einleiten des Fluids in den Gehäuseinnenraum vorhanden. Ebenso ist am Gehäuse ein Fluidauslass zum Ausleiten des Fluids aus dem Gehäuseinnenraum vorgesehen. Der Fluideinlass weist einen nach außen, vom Gehäuseinnenraum weg abstehenden Einlassstutzen auf. Der Fluidauslass umfasst einen nach außen, vom Gehäuseinnenraum weg abstehenden Auslassstutzen. Der Einlassstutzen ist dabei innerhalb des Auslassstutzens angeordnet. Vorzugsweise ist der Auslassstutzen konzentrisch zum Einlassstutzen in diesem angeordnet.

Besonders zweckmäßig kann der Einlassstutzen innerhalb des Auslassstutzens, insbesondere konzentrisch zu diesem, am Gehäuse angeordnet sein und in den Gehäuseinnenraum hinein ragen. Auf diese Weise wird einerseits der Anschluss des Behältnisses an den Abwärmenutzungskreislauf weiter vereinfacht und andererseits verhindert, dass in gasförmiger Phase in das Behältnis eintretendes Fluid sich mit der flüssigen Phase des Fluids vermischt.

Die Erfindung betrifft ferner eine Abwärmenutzungseinrichtung, insbesondere für ein Kraftfahrzeug, mit einem Abwärmenutzungskreislauf. Im Abwärmenutzungskreislauf ist ein vorangehend vorgestelltes Behältnis angeordnet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: ein erstes Beispiel eines erfindungsgemäßen Behältnisses gemäß dem ersten Aspekt der Erfindung,
- Fig. 2: ein zweites Beispiel eines erfindungsgemäßen Behältnisses gemäß dem ersten Aspekt der Erfindung,
- Fig. 3: ein drittes Beispiel eines erfindungsgemäßen Behältnisses gemäß dem ersten Aspekt der Erfindung,
- Fig. 4: ein Beispiel eines erfindungsgemäßen Behältnisses gemäß dem zweiten Aspekt der Erfindung.

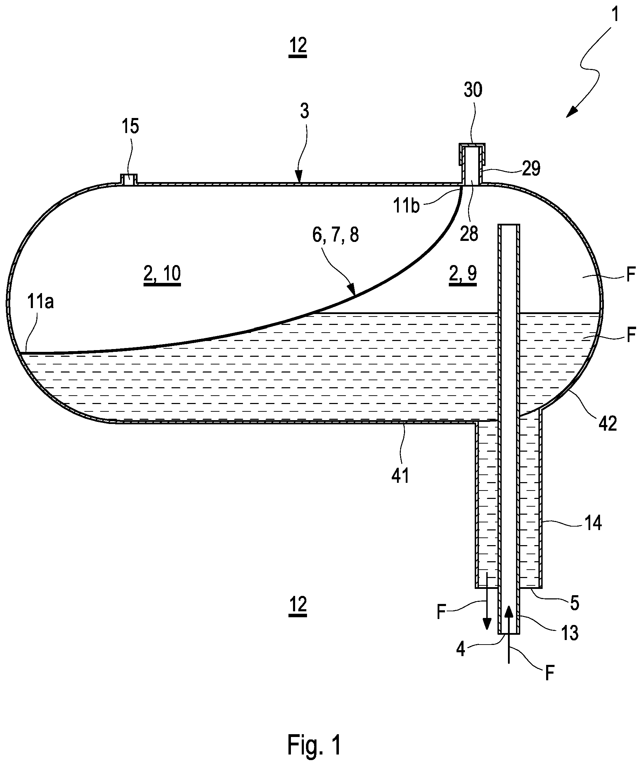

Figur 1 illustriert in schematischer Darstellung ein erstes Beispiel eines Behältnisses 1 für eine Abwärmenutzungseinrichtung gemäß dem ersten Aspekt der Erfindung. Das Behältnis 1 umfasst ein ausreichend dimensioniertes und einen Gehäuseinnenraum 2 begrenzendes Gehäuse 3. Am Gehäuse 3 sind ein Fluideinlass 4 zum Einleiten eines Fluids (Pfeil F) in den Gehäuseinnenraum 2 und ein Fluidauslass 5 zum Ausleiten des Fluids F aus dem Gehäuseinnenraum 2 angeordnet. Im Gehäuseinnenraum 2 ist eine Trenn-einrichtung 6 angeordnet. Die Trenneinrichtung 6 unterteilt den Gehäuseinnenraum 2 in einen über den Fluideinlass 4 mit dem Fluid F befüllbaren ersten Teilraum 9 und einen fluidisch vom ersten Teilraum 9 getrennten, zweiten Teilraum 10. Hierzu umfasst die Trenneinrichtung 6 ein Trennelement 7 aus einem fluiddichten und federelastischen Material. Mittels des Trennelements 7 kann das Volumenverhältnis der beiden Teilräume 9, 10 zueinander variiert und eingestellt werden.

Im Beispielszenario der Figur 1 ist das Trennelement 7 eine fluiddichte Membran 8. Das Trennelement 7 bzw. die Membran 8 kann eine Folie aus einem flexiblen Material sein oder eine solche Folie umfassen. Das Trennelement 7 bzw. die fluiddichte Membran 8 kann ferner federelastisch dehnbar ausgebildet sein. Dies gilt insbesondere bei einer Realisierung des Trennelements 7 bzw. der Membran 8 als Folie. Das Material des Trennelements 7 bzw. der Membran 8 kann ein Kunststoff sein oder zumindest einen Kunststoff umfassen. Vorzugsweise ist das Material der Membran 8 ein Elastomer. Die Membran 8 kann wie in Figur 1 angedeutet direkt, also ohne weitere Befestigungsmittel, mittels einer Klebverbindung innen am Gehäuse 2 befestigt sein. Die Membran 8 kann in der in Figur 1 gezeigten Schnittdarstellung mit gegenüberliegenden Endabschnitten 11a, 11b im Abstand zueinander am Gehäuse 3 befestigt sein. Anstelle einer direkten Befestigung mit Hilfe einer Klebverbindung ist alternativ dazu auch die Verwendung einer anderen Befestigungsmethode, beispielsweise eine Klemm- oder Schraubverbindung vorstellbar. Hierzu ist es erforderlich, die Trenneinrichtung 7 mit geeigneten Befestigungselementen auszustatten, mittels welcher besagte Klemm- bzw. Schraubverbindung der Membran 8, also des Trennelements 7, am Gehäuse 3 realisiert werden kann.

Wie die Figur 1 weiter erkennen lässt, ist am im Gehäuse 3 des Behältnisses 1 eine Öffnung 15 zum Druckausgleich vorhanden, welche den zweiten Teilraum 10 des Gehäuseinnenraums 2 fluidisch mit der äußeren Umgebung 12 des Behältnisses 1 verbindet. Weiterhin ist im Gehäuse 3 auch eine Befüll- und Entlüftungsöffnung 28 mit einem vom Gehäuse 3 nach außen, vom Gehäuseinnenraum 2 weg abstehenden Befüll- und Entlüftungsstutzen 29 vorgesehen, welche den ersten Teilraum 9 des Gehäuseinnenraums 2 fluidisch mit der äußeren Umgebung 12 des Behältnisses 1 verbindet. Der Befüll- und Entlüftungsstutzen 29 kann mittels einer Dichtkappe 30 verschlossen sein.

Entsprechend Figur 1 weist der Fluideinlass 4 einen nach außen, vom Gehäuseinnenraum 2 weg vom Gehäuse 3 abstehenden Einlassstutzen 13 auf, der zum Einleiten des Fluid F in den ersten Teilraum 9 mit dem Abwärmenutzungskreis (in Figur 1 nicht gezeigt) der Abwärmenutzungseinrichtung verbunden sein kann.

Der Fluidauslass 5 kann in analoger Weise zum Fluideinlass 4 ebenfalls einen nach außen vom Gehäuse 3 abstehenden Auslassstutzen 14 aufweisen. Der Auslassstutzen 14 dient dazu, das in den ersten Teilraum 9 eingebrachte Fluid F wieder aus dem Gehäuse 2 auszuleiten. Hierzu kann auch der Auslassstutzen 14 mit dem Abwärmenutzungskreis der Abwärmenutzungseinrichtung verbunden sein (in Figur 1 nicht gezeigt). In dem in Figur 1 gezeigten, nicht in der Abwärmenutzungseinrichtung montierten Zustand des Behältnisses 1 verbinden sowohl der Fluideinlass 4 als auch der Fluidauslass 5 den ersten Teilraum 9 fluidisch mit der äußeren Umgebung 12 des Behältnisses 1.

Entsprechend Figur 1 ist der Auslassstutzen 14 in einem bezüglich der Gebrauchslage des Behältnisses 1 in der Abwärmenutzungseinrichtung unteren Bereich 42 des Gehäuses 3 angeordnet. Vorzugsweise ist der Auslassstutzen in einem Gehäuseboden 41 des Gehäuses 3 angeordnet. Auf diese Weise kann die in der Regel im unteren Bereich 42 des Gehäuseinnenraums 2 vorhandene flüssige Phase des Fluids F (vgl. Fig. 1) direkt aus dem ersten Teilraum 9 entnommen werden. Eine unerwünschte Entnahme der gasförmigen Phase des Fluid F aus dem ersten Teilraum 9 wird hingegen vermieden. Wie die Figur 1 erkennen lässt, ist auch der Einlassstutzen 13 im unteren Bereich 42 des Gehäuses 3 angeordnet. Vorzugsweise ist auch der Einlassstutzen 13 im Gehäuseboden 41 des Gehäuses 3 angeordnet. Durch eine derartige Anordnung von Fluideinlas und Fluidauslass in demselben Bereich des Gehäuses wird der Anschluss des Behältnisses an den Abwärmenutzungskreislauf in nicht unerheblichem Maße vereinfacht.

Besonders zweckmäßig kann der Einlassstutzen 13 wie in Figur 1 gezeigt innerhalb des Auslassstutzens 14, insbesondere konzentrisch zu diesem, am Gehäuse 3 angeordnet sein und in den Gehäuseinnenraum 2 hineinragen. Auf diese Weise wird einerseits der Anschluss des Behältnisses 1 an den Abwärmenutzungskreislauf weiter vereinfacht; andererseits wird aber auch verhindert, dass in gasförmiger Phase in das Behältnis 1 eintretendes Fluid F sich mit der flüssigen Phase des Fluids F vermischt.

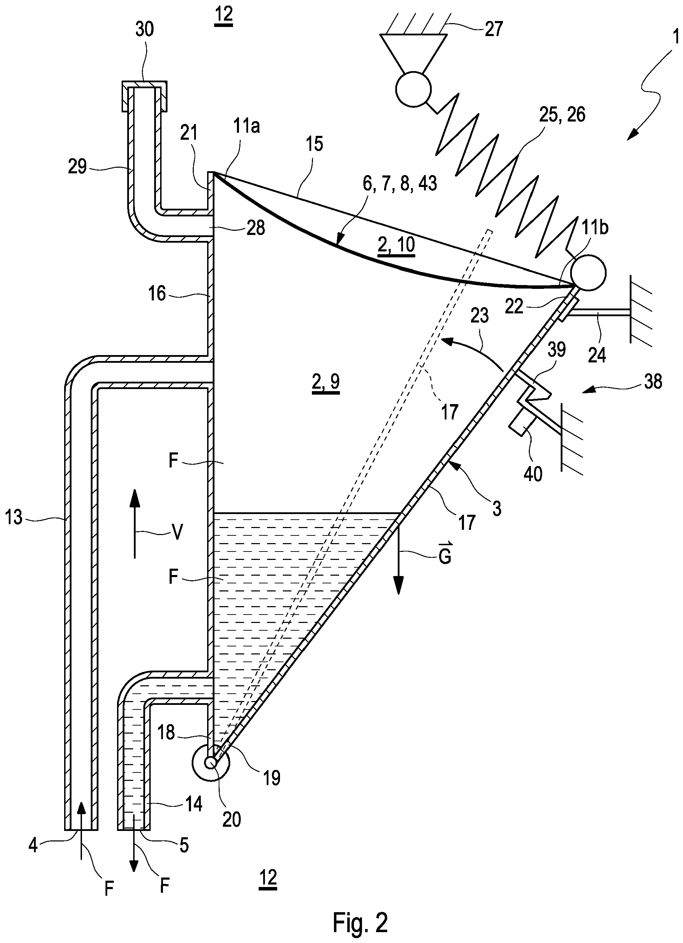

Die Figur 2 zeigt ein zweites Beispiel eines erfindungsgemäßen Behältnisses 1. Auch im Beispiel der Figur 2 besitzt die Trenneinrichtung 6 ein als Membran 8 ausgebildetes Trennelement 7. Im Beispiel der Figur 2 weist das Gehäuse 3 eine erste Gehäusewand 16 und eine schwenkbar an dieser befestigte zweite Gehäusewand 17 auf. Die erste und die zweite Gehäusewand 16, 17 besitzen einen ersten bzw. zweiten Befestigungsabschnitt 18, 19, im Bereich derer sie, insbesondere unter Verwendung eines in Figur 2 nur grobschematisch angedeuteten Scharniers 20, schwenkbar aneinander befestigt sind. Die beiden in der schematischen Darstellung der Figur 2 nicht gezeigten, das Gehäuse 3 komplettierenden Gehäusewände können faltenbalg-artig ausgebildet sein.

Der Endabschnitt 11a des Trennelement 7 ist mittels einem dem ersten Befestigungsabschnitt 18 gegenüberliegenden Endabschnitt 21 der ersten Gehäusewand 16 an dieser befestigt ist. In analoger Weise ist der Endabschnitt 11b des Trennelements 7 mittels einem dem zweiten Befestigungsabschnitt 19 gegenüberliegenden Endabschnitt 22 der zweiten Gehäusewand 17 an dieser befestigt. Mit anderen Worten, das Trennelement 7 ist zur Ausbildung eines Behältnis-Balgs 43 sowohl an der ersten als auch an der zweiten Gehäusewand befestigt. Die Befestigung des Trennelements 7 kann mittels einer der anhand des Beispiels der Figur 1 erläuterten Befestigungsmethoden erfolgen.

Im Beispielszenario der Figur 2 ist der zweite Teilraum 10 auf einer dem ersten Teilraum 9 gegenüberliegenden Seite des Trennelements 7 angeordnet und ist offen ausgebildet, d.h. die Öffnung 15 zum Druckausgleich wird im Behältnis der Figur 2 durch die beiden Endabschnitte 21, 22 der beiden Gehäusewände 16, 17 eingefasst. Eine separate, den zweiten Teilraum 10 des Gehäuseinnenraums 2 begrenzende Gehäusewand mit darin vorgesehener Öffnung 15, wie im Beispiel der Figur 1 realisiert, kann im Beispiel der Figur 2 entfallen.

Die schwenkbar aneinander befestigten Gehäusewände 16, 17 sind zwischen einer in Figur 2 gezeigten ersten Position, in welcher der erste Teilraum 9 ein maximales Volumen besitzt, und einer zweiten Position in welcher dieses Volumen einen Minimalwert annimmt, zueinander verschwenkbar. Im Beispiel der Figur 1 ist die erste Gehäusewand 16 ortsfest, also stationär ausgebildet, und die zweite Gehäusewand 17 relativ zu dieser schwenkbar.

Besagte zweite Position mit minimalem Volumen des Gehäuseinnenraums 2 ist in Figur 2 durch eine gestrichelte Darstellung der zweiten Gehäusewand 17 angedeutet. Die zweite Gehäusewand 17 ist also durch eine Schwenkbewegung entlang der Schwenkrichtung 23 von der ersten in die zweite Position schwenkbar. Im Extremfall kann das in der zweiten Position vorhandene minimale Volumen ein Null-Volumen sein; in diesem Fall liegt die zweite Gehäusewand 17 flächig an der ersten Gehäusewand 16 an (in Figur 2 nicht gezeigt). Man erkennt, dass sich die erste Gehäusewand 16 bezüglich einer in Figur 2 gezeigten Gebrauchslage des Behältnisses 1 im Wesentlichen entlang einer vertikalen Richtung V erstreckt. Die zweite Gehäusewand 17 ist in der Gebrauchslage des Behältnisses 1 in der ersten Position relativ zur ersten Gehäusewand 16 schräg angeordnet ist, d.h. die zweite Gehäusewand 17 erstreckt sich zumindest in der ersten Position mit maximalem Volumen des Gehäuseinnenraums 2 nicht in der vertikalen Richtung V. Im Beispiel der Figur 2 trifft dies auch für die gestrichelt angedeutete zweite Position der zweiten Gehäusewand 17 zu. Nur für den Fall, dass das minimale Volumen des Gehäuseinnenraums 2 in der zweiten Position der zweiten Gehäusewand 17 ein Null-Volumen ist und die zweite Gehäusewand 17 folglich flächig an der ersten Gehäusewand 16 anliegt, würde sich auch die zweite Gehäusewand 17 in der vertikalen Richtung V erstrecken (nicht gezeigt). In der in Figur 2 gezeigten ersten Position wird die zweite Gehäusewand 17 durch die auf sie wirkende Gewichtskraft sowie durch die auf das Fluid F wirkende Gewichtskraft - beide in Figur 2 angedeutet durch den Schwerkraft-Vektor G - zur ersten Position mit maximalem Volumen bewegt bzw. in dieser Position stabilisiert. Die schräge Anordnung der zweiten Gehäusewand 17 führt also dazu, dass das Eigengewicht der zweiten Gehäusewand 17 sowie des auf ihr lastenden Fluids im ersten Teilraum einer Bewegung der zweiten Gehäusewand 17 von der ersten Position weg entgegenwirkt. Bei einem Kaltabstellen kann der Großteil des flüssigen Fluids aus dem Behältnis 1 in den Abwärmenutzungskreis strömen, während sich die zweite Gehäusewand 17 mittels einer Schwenkbewegung der ersten Gehäusewand 16 annähert. Im Zuge dieser Bewegung reduziert sich die vom flüssigen Fluid auf die zweite Gehäusewand 17 ausgeübte Gewichtskraft. Gleichzeitig wird das von der zweiten Gehäusewand 17 ausgeübte Drehmoment reduziert, so dass sich der Balg schließen kann. Auf diese Weise kann ein unerwünschter stationärer Unterdruck im Behältnis 1 weitgehend oder sogar vollständig vermieden werden. Eine Weiterbewegung der zweiten Gehäusewand 17 über die erste Position hinaus kann mit Hilfe eines geeigneten, in Figur 2 nur schematisch angedeuteten mechanischen Anschlags 24 begrenzt werden.

Wie die Figur 2 anschaulich belegt, kann das Behältnis 1 auch eine Vorspanneinrichtung 25 umfassen, welches die zweite Gehäusewand 17 von der ersten Gehäusewand 16 weg zur ersten Position hin vorspannt. Hierzu kann die Vorspanneinrichtung 25 eine Druckfeder 26 umfassen, welche die zweite Gehäusewand 17 von der ersten Gehäusewand 16 weg zur ersten Position hin vorspannt. Hierzu kann sich die Druckfeder einen Ends an der zweiten Gehäusewand 17 und anderen Ends an der ersten Gehäusewand 16 abstützen (nicht gezeigt) oder, alternativ dazu, wie in Figur 2 dargestellt einen Ends an der zweiten Gehäusewand 17 und anderen Ends ein einem externen, nicht zum Behältnis 1 gehörigen Bauteil 27, welches ortsfest zur ersten Gehäusewand 16 ausgebildet ist. Die Vorspanneinrichtung wirkt der vom Umgebungsdruck auf die Gehäusewände ausgebübten Kraft zur Reduzierung des Volumens des ersten Teilraums entgegen, d.h. der Kondensationsdruck und der mittels des Vorspannelements erzeugte Gegendruck sind im Gleichgewichtszustand gleich dem Umgebungsdruck. Dies gestattet es, das im Behältnis gespeicherte Fluid bei einem Kondensationsdruck zu kondensieren, der einen geringeren Wert aufweist als der Umgebungsdruck. Diese Maßnahme kann zu einem verbesserten Wirkungsgrad der das Behältnis 1 verwendenden Abwärmenutzungseinrichtung führen.

Alternativ oder zusätzlich zur Vorspanneinrichtung 25 kann das Behältnis 1 auch eine lösbare Fixiereinrichtung 38 umfassen. Mittels der Fixiereinrichtung 38 können die beiden Gehäusewände 16, 17 in der ersten Position fixiert werden. Hierzu ist die Fixiereinrichtung 38 als in Figur 2 nur schematisch angedeuteter Schnappverschluss 39 ausgebildet, mittels welchem die zweite Gehäusewand 17 in der in Figur 2 gezeigten Position arretiert wird, welche besagter erster Position der beiden Gehäusewände 17, 18 entspricht. Mittels eines Betätigungselements 40, welches Teil der Fixiereinrichtung 38 ist, kann der Schnappverschluss 39 im Bedarfsfall geöffnet und die Fixierung der zweiten Gehäusewand 17 aufgehoben werden.

Im Beispiel der Figur 2 sind der Fluideinlass 4 und der Fluidauslass 5 an der ersten Gehäusewand 16 angeordnet. Der Fluidauslass 5 mit dem Auslassstutzen 14 ist dabei bezüglich der Gebrauchslage des Behältnisses 1 unterhalb des Fluideinlasses 4 mit dem Einlassstutzen 13 angeordnet.

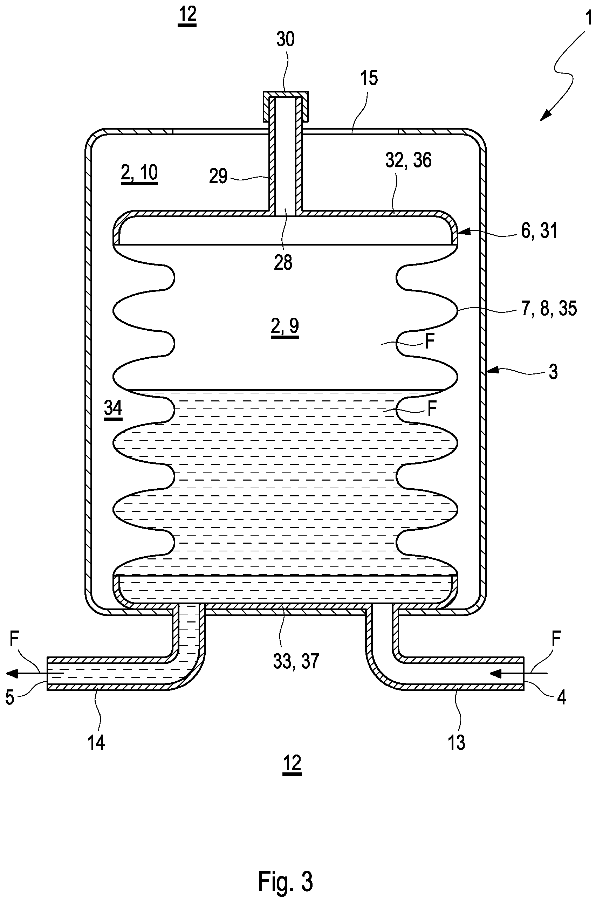

Figur 3 zeigt ein weiteres Beispiel für ein erfindungsgemäßes Behältnis 1. Im Beispiel der Figur 3 ist die Trenneinrichtung 6 als ein im Gehäuseinnenraum 2 angeordneter Faltenbalg 31 ausgebildet. Wie Figur 3 anschaulich belegt, weist die

Trenneinrichtung 6 eine erste Faltenbalg-Wand 32 und eine zweite Faltenbalg-Wand 33 auf. Die beiden Faltenbalg-Wände 32, 33 begrenzen den in der Art eines Zylinder ausgebildeten Faltenbalg 31 stirnseitig, d.h. die erste Faltenbalg-Wand 32 ist als erste Stirnwand 36 und die zweite Faltenbalg-Wand 33 als zweite Stirnwand 37 des zylindrischen Faltenbalgs 31 ausgebildet. Die beiden Faltenbalg-Wände 32, 33 sind mittels des Trennelements 7 der Trenneinrichtung 6 in Form einer fluiddichten Membran 8 miteinander verbunden. Hierzu ist das Trennelement 7 als eine den Faltenbalg 31 umfangsseitig begrenzende, federelastische Umfangswand 35 ausgebildet. Besagte Umfangswand 35 kann mittels einer fluiddichten Klebverbindung an den beiden Stirnwänden 36, 37 befestigt sein. Alternativ dazu kommen die anhand des Beispiels der Figur 1 genannten Befestigungsmethoden, also insbesondere eine Schraub- oder Klemmverbindung in Betracht.

Im Beispielszenario der Figur 3 begrenzen also die beiden Faltenbalg-Wände 32, 33 und das Trennelement 7 den ersten Teilraum 9. Der zweite Teilraum 10 wird durch den Zwischenraum 34 zwischen dem Faltenbalg 31 und dem Gehäuse 3 des Behältnisses 1 gebildet. Alternativ zur Ausbildung als Faltenbalg 31 kann das Trennelement 7 auch als federelastischer Ballon ausgebildet sein.

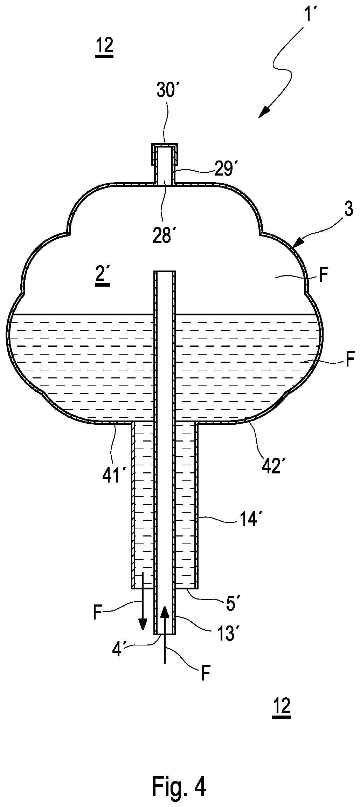

Die Figur 4 zeigt ein Beispiel eines Behältnisses 1' für eine Abwärmenutzungseinrichtung gemäß dem zweiten Aspekt der Erfindung. Das Behältnis 1' umfasst ein einen Gehäuseinnenraum 2' begrenzendes Gehäuse 3' aus einem federelastischen Material. Am Gehäuse 3' ist ein Fluideinlass 4' zum Einleiten des Fluids F' in den Gehäuseinnenraum 3' vorgesehen. Weiterhin ist am Gehäuse 3' ein Fluidauslass 5' zum Ausleiten des Fluids F' aus dem Gehäuseinnenraum 2' angeordnet. Wie Figur 4 erkennen lässt, umfasst der Fluideinlass 4' einen nach außen, vom Gehäuseinnenraum 2' weg abstehenden Einlassstutzen 13'. Ebenso umfasst der Fluidauslass 5' einen nach außen, vom Gehäuseinnenraum 2' weg abstehenden Auslassstutzen 14'. Entsprechend Figur 4 ist der Einlassstutzen 13' innerhalb des Auslassstutzens 14' konzentrisch zu diesem angeordnet. Bei dem Beispiel der Figur 4 kann aus auf ein starres Gehäuse vollständig verzichtet werden. Die Volumenvariation des Gehäuseinnenraums 2' erfolgt mit Hilfe des federelastischen Materials des Gehäuses 3' selbst, so dass auf ein federelastische Trenneinrichtung mit einem Trennelement wie beim Beispiel der Figuren 1 bis 3 verzichtet werden kann.

## Patentansprüche

1. Behältnis (1) für eine Abwärmenutzungseinrichtung,
- mit einem einen Gehäuseinnenraum (2) begrenzenden Gehäuse (3),
- mit einer im Gehäuseinnenraum (2) angeordneten Trenneinrichtung (6), welche den Gehäuseinnenraum (2) in einen mit einem Fluid (F) befüllbaren ersten Teilraum (9) und einen fluidisch vom ersten Teilraum (9) getrennten, zweiten Teilraum (10) unterteilt und ein Trennelement (7) aus einem fluiddichten und federelastischen Material zum Variieren des Volumenverhältnisses der beiden Teilräume (9, 10) zueinander umfasst,
- mit einem am Gehäuse (3) vorhandenen Fluideinlass (4) zum Einleiten des Fluids (F) in den ersten Teilraum (9) und mit einem am Gehäuse (3) vorhandenen Fluidauslass (5) zum Ausleiten des Fluids (F) aus dem ersten Teilraum (9),
**dadurch gekennzeichnet, dass**
das Trennelement (7) eine Folie umfasst oder ist, die aus einem flexiblen und federelastisch dehnbaren Material ausgebildet ist.

2. Behältnis nach Anspruch 1,
**dadurch gekennzeichnet, dass**
das Trennelement (7) eine fluiddichte Membran (8) umfasst oder ist.

3. Behältnis nach einem der vorhergehenden Ansprüche,
**dadurch gekennzeichnet, dass**
das Material des Trennelements (7), insbesondere das flexible Material der Folie, einen Kunststoff umfasst oder ein Kunststoff ist.

4. Behältnis nach Anspruch 2 oder 3,
**dadurch gekennzeichnet, dass**
die fluiddichte Membran (8) mittels einer Klebverbindung innen am Gehäuse (3) befestigt ist.

5. Behältnis nach einem der vorhergehenden Ansprüche,
**dadurch gekennzeichnet, dass**
im Gehäuse (3) eine Öffnung (15) zum Druckausgleich vorhanden ist, welche den zweiten Teilraum (10) des Gehäuseinnenraums (2) fluidisch mit der äußeren Umgebung (12) des Behältnisses (1) verbindet.

6. Behältnis nach einem der vorhergehenden Ansprüche,
**dadurch gekennzeichnet, dass**
das Gehäuse (3) eine erste Gehäusewand (16) und eine schwenkbar an dieser befestigte zweite Gehäusewand (17) umfasst,
wobei das Trennelement (7) an der ersten und an der zweiten Gehäusewand (16, 17) befestigt ist.

7. Behältnis nach Anspruch 6,
**dadurch gekennzeichnet, dass**
die erste und die zweite Gehäusewand (16, 17) einen ersten bzw. zweiten Befestigungsabschnitt (18, 19) aufweisen, mittels welchen sie aneinander befestigt sind,
wobei das Trennelement (7) in einem dem ersten Befestigungsabschnitt (18) gegenüberliegenden Endabschnitt (21) der ersten Gehäusewand (16) an dieser befestigt ist und in einem dem zweiten Befestigungsabschnitt (19) gegenüberliegenden Endabschnitt (22) der zweiten Gehäusewand (17) an dieser befestigt ist.

8. Behältnis nach Anspruch 6 oder 7,
**dadurch gekennzeichnet, dass**
wenigstens eine der beiden Gehäusewände (16, 17) zwischen einer ersten Position, in welcher der erste Teilraum (9) ein maximales Volumen besitzt, und einer zweiten Position, in welcher dieses Volumen einen Minimalwert annimmt, schwenkbar ist,
wobei sich die erste Gehäusewand (16) in der ersten Position bezüglich einer Gebrauchslage des Behältnisses (1) im Wesentlichen in einer vertikalen Richtung (V) erstreckt und die zweite Gehäusewand (17) in den von der zweiten Position verschiedenen Positionen schräg relativ zur ersten Gehäusewand (16) angeordnet ist.

9. Behältnis nach einem der Ansprüche 6 bis 8, **dadurch gekennzeichnet, dass** das Behältnis (1) eine Vorspanneinrichtung (25) umfasst, welches die zweite Gehäusewand (17) von der ersten Gehäusewand (16) weg vorspannt.

10. Behältnis nach Anspruch 9,
**dadurch gekennzeichnet, dass**
die Vorspanneinrichtung (25) eine Druckfeder (27), insbesondere aus einem Bi-Metall oder aus einem Dehnstoff, umfasst, welche die beiden Gehäusewände (16, 17) zur ersten Position hin vorspannt.

11. Behältnis nach einem der Ansprüche 6 bis 10,
**dadurch gekennzeichnet, dass**
das Behältnis (1) eine lösbare Fixiereinrichtung (38) umfasst, welche die beiden Gehäusewände (17, 18) in der ersten Position fixiert.

12. Behältnis nach Anspruch 11,
**dadurch gekennzeichnet, dass**
die lösbare Fixiereinrichtung (38) als Schnappverschluss (39) zum Fixieren der Gehäusewände (16, 17) in der ersten Position ausgebildet ist, wobei die Fixiereinrichtung (38) ein Betätigungselement (40) zum Lösen des Schnappverschlusses (39) aufweist.

13. Behältnis nach einem der vorhergehenden Ansprüche,
**dadurch gekennzeichnet, dass**
das Trennelement (7) in der Art eines Ballons ausgebildet ist.

14. Behältnis nach einem der vorhergehenden Ansprüche,
**dadurch gekennzeichnet, dass**
die Trenneinrichtung (6) als im Gehäuseinnenraum (2) angeordneter Faltenbalg (31) ausgebildet ist,
wobei die Trenneinrichtung (6) wenigstens eine erste Faltenbalg-Wand (32) aufweist, welche mittels des Trennelements (7) federelastisch mit einer zweiten Faltenbalg-Wand (33) verbunden ist, so dass die beiden Faltenbalg-Wände (32, 33) und das Trennelement (7) den ersten Teilraum (9) begrenzen.

15. Behältnis nach Anspruch 14,
**dadurch gekennzeichnet, dass**
die erste und zweite Faltenbalg-Wand (32, 33) als den Faltenbalg (31) stirnseitig begrenzende erste und zweite Stirnwand (36, 37) ausgebildet sind,
wobei das Trennelement (7) als den Faltenbalg (31) umfangsseitig begrenzende, federelastische Umfangswand (35) ausgebildet ist.

16. Behältnis nach Anspruch 15,
**dadurch gekennzeichnet, dass**
die Umfangswand (35) mittels einer fluiddichten Klebverbindung an den beiden Stirnwänden (36, 37) befestigt ist.

17. Behältnis nach einem der vorhergehenden Ansprüche,
**dadurch gekennzeichnet, dass**
- der Fluidauslass (5) einen nach außen vom Gehäuse (3) abstehenden Auslassstutzen (14) aufweist, der in einem unteren Bereich (42) des Gehäuses (3), insbesondere am Gehäuseboden (41) des Gehäuses (3), angeordnet ist, und/oder dass
- der Fluideinlass (4) einen nach außen vom Gehäuse (3) abstehenden Einlassstutzen (13) aufweist, der in einem unteren Bereich (42) des Gehäuses (3), insbesondere am Gehäuseboden (41) des Gehäuses (3), angeordnet ist.

18. Abwärmenutzungseinrichtung, insbesondere für ein Kraftfahrzeug,
- mit einem Abwärmenutzungskreislauf,
- mit einem im Abwärmenutzungskreislauf angeordneten Behältnis (1; 1') nach einem der vorhergehenden Ansprüche.

## Claims

1. Container (1) for a waste heat utilisation device,
- having a housing (3) delimiting a housing interior (2),
- having a separating device (6) arranged in the housing interior (2), which divides the housing interior (2) into a first sub-chamber (9) able to be filled with a fluid (F) and a second sub-chamber (10) fluidly separated from the first sub-chamber (9) and comprises a separating element (7) made from a fluid-tight and resilient material to vary the volume ratio of the two sub-chambers (9, 10) with respect to each other,
- having a fluid inlet (4) present on the housing (3) to introduce the fluid (F) into the first sub-chamber (9) and having a fluid outlet (5) present on the housing (3) to channel out the fluid (F) from the first sub-chamber (9),
**characterised in that** the separating element (7) comprises or is a film which is formed from a flexible and resiliently elastic material.

2. Container according to claim 1,
**characterised in that**
the separating element (7) comprises or is a fluid-tight membrane (8).

3. Container according to any one of the preceding claims,
**characterised in that**
the material of the separating element (7), in particular the flexible material of the film, comprises a plastic or is a plastic.

4. Container according to claim 2 or 3,
**characterised in that**
the fluid-tight membrane (8) is fastened to the housing (3) on the inside by means of an adhesive bond.

5. Container according to any one of the preceding claims,
**characterised in that**,
in the housing (3), an opening (15) is present for pressure equalisation, which fluidly connects the second sub-chamber (10) of the housing interior (2) to the outer environment (12) of the container (1).

6. Container according to any one of the preceding claims,
**characterised in that**
the housing (3) comprises a first housing wall (16) and a second housing wall (17) pivotably fastened to this, wherein the separating element (7) is fastened to the first and to the second housing wall (16, 17).

7. Container according to claim 6,
**characterised in that**
the first and the second housing wall (16, 17) have a first or second fastening section (18, 19), by means of which they are fastened to each other, wherein the separating element (7) is fastened to this in an end section (21) of the first housing wall (16) lying opposite the first fastening section (18) and is fastened to this in an end section (22) of the second housing wall (17) lying opposite the second fastening section (19).

8. Container according to claim 6 or 7,
**characterised in that**
at least one of the two housing walls (16, 17) is pivotable between a first position in which the first sub-chamber (9) has a maximum volume and a second position in which this volume assumes a minimum value, wherein the first housing wall (16) extends substantially in a vertical direction (V) in the first position with regard to an operating position of the container (1) and the second housing wall (17) is arranged at an angle relative to the first housing wall (16) in the positions which are different to the second position.

9. Container according to any one of claims 6 to 8,
**characterised in that**
the container (1) comprises a pre-tensioning device (25) which pre-tensions the second housing wall (17) away from the first housing wall (16).

10. Container according to claim 9,
**characterised in that**
the pre-tensioning device (25) comprises a compression spring (27), in particular made from a bi-metal or from an expansion material, which pre-tensions the two housing walls (16, 17) towards a first position.

11. Container according to any one of claims 6 to 10,
**characterised in that**
the container (1) comprises a releasable fixing device (38) which fixes the two housing walls (17, 18) in the first position.

12. Container according to claim 11,
**characterised in that**
the releasable fixing device (38) is formed as a snap lock (39) to fix the housing walls (16, 17) in the first position, wherein the fixing device (38) has an actuating element (40) to release the snap lock (39).

13. Container according to any one of the preceding claims,
**characterised in that**
the separating element (7) is formed in the manner of a balloon.

14. Container according to any one of the preceding claims,
**characterised in that**
the separating device (6) is formed as a bellows (31) arranged in the housing interior (2), wherein the separating device (6) has at least one bellows wall (32) which is resiliently connected to the second bellows wall (33) by means of the separating element (7) such that the two bellows walls (32, 33) and the separating element (7) delimit the first sub-chamber (9).

15. Container according to claim 14,
**characterised in that**
the first and second bellows wall (32, 33) are formed as a first and second front wall (36, 37) delimiting the bellows (31) on the front side, wherein the separating element (7) is formed as a resilient peripheral wall (35) delimiting the bellows (31) on the peripheral side.

16. Container according to claim 15,
**characterised in that**
the peripheral wall (35) is fastened to the two front walls (36, 37) by means of a fluid-tight adhesive bond.

17. Container according to any one of the preceding claims,
**characterised in that**
- the fluid outlet (5) has an outlet nozzle (14) projecting outwardly from the housing (3), said outlet nozzle being arranged in a lower region (42) of the housing (3), in particular on the housing base (41) of the housing (3), and/or
- the fluid inlet (4) has an inlet nozzle (13) projecting outwardly from the housing (3), said inlet nozzle being arranged in a lower region (42) of the housing (3), in particular on the housing base (41) of the housing (3).

18. Waste heat utilisation device, in particular for a motor vehicle
- having a waste heat utilisation circuit,
- having a container (1; 1') according to any one of the preceding claims, arranged in the waste heat utilisation circuit.

## Revendications

1. Récipient (1) pour un dispositif de récupération de chaleur dissipée,
- avec un boîtier (3) délimitant un espace intérieur de boîtier (2),
- avec un dispositif de séparation (6) disposé dans l'espace intérieur de boîtier (2), qui divise l'espace intérieur de boîtier (2) en un premier espace partiel (9) pouvant être rempli d'un fluide (F) et en un deuxième espace partiel (10) séparé fluidiquement du premier espace partiel (9), et qui comprend un élément de séparation (7) en un matériau étanche aux fluides et élastique pour faire varier le rapport volumique des deux espaces partiels (9, 10) l'un par rapport à l'autre,
- avec une admission de fluide (4) présente sur le boîtier (3) pour l'introduction du fluide (F) dans le premier espace partiel (9) et avec une sortie de fluide (5) présente sur le boîtier (3) pour l'évacuation du fluide (F) hors du premier espace partiel (9),
**caractérisé en ce que**
l'élément de séparation (7) comprend ou est une feuille qui est formée en un matériau flexible et extensible de manière élastique.

2. Récipient selon la revendication 1,
**caractérisé en ce que**
l'élément de séparation (7) comprend ou est une membrane étanche aux fluides (8).

3. Récipient selon l'une quelconque des revendications précédentes,
**caractérisé en ce que**
le matériau de l'élément de séparation (7), en particulier le matériau flexible de la feuille, comprend un plastique ou est un plastique.

4. Récipient selon la revendication 2 ou 3,
**caractérisé en ce que**
la membrane étanche aux fluides (8) est fixée au boîtier (3) au moyen d'une liaison collée à l'intérieur.

5. Récipient selon l'une quelconque des revendications précédentes,
**caractérisé en ce que**
une ouverture (15) pour la compensation de pression est présente dans le boîtier (3), qui relie de manière fluidique le deuxième espace partiel (10) de l'espace intérieur de boîtier (2) à l'environnement extérieur (12) du récipient (1).

6. Récipient selon l'une quelconque des revendications précédentes,
**caractérisé en ce que**
le boîtier (3) comprend une première paroi de boîtier (16) et une deuxième paroi de boîtier (17) fixée à celle-ci de manière pivotante,
dans lequel l'élément de séparation (7) est fixé à la première et à la deuxième paroi de boîtier (16, 17).

7. Récipient selon la revendication 6,
**caractérisé en ce que**
la première et la deuxième paroi de boîtier (16, 17) comprennent une première, respectivement une deuxième portion de fixation (18, 19) au moyen desquelles elles sont fixées l'une à l'autre,
dans lequel l'élément de séparation (7) est fixé à la première paroi de boîtier (16) dans une portion d'extrémité (21) de celle-ci opposée à la première portion de fixation (18) et est fixé à la deuxième paroi de boîtier (17) dans une portion d'extrémité (22) de celle-ci opposée à la deuxième portion de fixation (19).

8. Récipient selon la revendication 6 ou 7,
**caractérisé en ce que**
au moins une des deux parois de boîtier (16, 17) peut pivoter entre une première position, dans laquelle le premier espace partiel (9) possède un volume maximal, et une deuxième position, dans laquelle ce volume prend une valeur minimale,
dans lequel la première paroi de boîtier (16) s'étend dans une direction sensiblement verticale (V) dans la première position par rapport à une position d'utilisation du récipient (1) et la deuxième paroi de boîtier (17) est disposée dans les positions différentes de la deuxième position de manière oblique par rapport à la première paroi de boîtier (16).

9. Récipient selon l'une quelconque des revendications 6 à 8,
**caractérisé en ce que**
le récipient (1) comprend un dispositif de précontrainte (25) qui précontraint la deuxième paroi de boîtier (17) à distance de la première paroi de boîtier (16).

10. Récipient selon la revendication 9,
**caractérisé en ce que**
le dispositif de précontrainte (25) comprend un ressort de pression (27), en particulier en un bimétal ou en une matière expansible, qui précontraint les deux parois de boîtier (16, 17) vers la première position.

11. Récipient selon l'une quelconque des revendications 6 à 10,
**caractérisé en ce que**
le récipient (1) comprend un dispositif de fixation amovible (38) qui fixe les deux parois de boîtier (17, 18) dans la première position.

12. Récipient selon la revendication 11,
**caractérisé en ce que**
le dispositif de fixation amovible (38) est formé comme une fermeture à déclic (39) pour fixer les parois de boîtier (16, 17) dans la première position,
dans lequel le dispositif de fixation (38) présente un élément d'actionnement (40) pour débloquer la fermeture à déclic (39).

13. Récipient selon l'une quelconque des revendications précédentes,
**caractérisé en ce que**
l'élément de séparation (7) est formé à la façon d'un ballon.

14. Récipient selon l'une quelconque des revendications précédentes,
**caractérisé en ce que**
le dispositif de séparation (6) est formé comme un soufflet (31) disposé dans l'espace intérieur de boîtier (2),
dans lequel le dispositif de séparation (6) présente au moins une première paroi de soufflet (32), qui est reliée de manière élastique à une deuxième paroi de soufflet (33) au moyen de l'élément de séparation (7) de telle sorte que les deux parois de soufflet (32, 33) et l'élément de séparation (7) limitent le premier espace partiel (9).

15. Récipient selon la revendication 14,
**caractérisé en ce que**
la première et la deuxième paroi de soufflet (32, 33) sont formées comme des première et deuxième parois frontales (36, 37) délimitant le soufflet (31) du côté frontal,
dans lequel l'élément de séparation (7) est formé comme une paroi périphérique (35) élastique délimitant le soufflet (31) du côté périphérique.

16. Récipient selon la revendication 15,
**caractérisé en ce que**
la paroi périphérique (35) est fixée aux deux parois frontales (36, 37) au moyen d'une liaison collée étanche aux fluides.

17. Récipient selon l'une quelconque des revendications précédentes,
**caractérisé en ce que**
- la sortie de fluide (5) présente une tubulure de sortie (14) faisant saillie du boîtier (3) vers l'extérieur, qui est disposée dans une zone inférieure (42) du boîtier (3), en particulier sur le fond de boîtier (41) du boîtier (3), et/ou que
- l'admission de fluide (4) présente une tubulure d'admission (13) faisant saillie du boîtier (3) vers l'extérieur, qui est disposée dans une zone inférieure (42) du boîtier (3), en particulier sur le fond de boîtier (41) du boîtier (3).

18. Dispositif de récupération de chaleur dissipée, en particulier pour un véhicule automobile,
- avec un circuit de récupération de chaleur dissipée,
- avec un récipient (1 ; 1') selon l'une quelconque des revendications précédentes disposé dans le circuit de récupération de chaleur dissipée.
